# EUROPEAN PATENT APPLICATION

(11) **EP 4 787 545 A1**
(43) Date of publication of application: **05.08.2026**
(21) Application number: 24871632.6
(22) Date of filing: 23.08.2024
(51) Int. Cl.: H01M 10/615, H01M 10/623, H01M 10/625, H01M 10/627, H01M 10/643, H01M 10/647, H01M 10/655, H01M 10/6235, H01M 50/30, H01M 50/35, H01M 50/209, H01M 50/213, H01M 50/342, H01M 50/367

(54) **POWER SUPPLY DEVICE**

(30) Priority: 29.09.2023 JP 2023170504
(71) Applicant: Panasonic Intellectual Property Management Co., Ltd., Kadoma-shi, Osaka 571-0057 (JP)
(72) Inventor: SAKAMOTO, Tomonori, Kadoma-shi, Osaka 571-0057 (JP); LU, Jia, Kadoma-shi, Osaka 571-0057 (JP); UOTANI, Kazuto, Kadoma-shi, Osaka 571-0057 (JP)
(74) Representative: Novagraaf International SA
(86) International application number: PCT/JP2024/030021
(87) International publication number: WO 2025/069830

(57) **Abstract**

A power supply device includes: a plurality of secondary battery cells, each of the plurality of secondary battery cells including a cell exhaust mechanism configured to open in response to an increase in internal pressure of the each of the plurality of secondary battery cells; an exterior case accommodating the plurality of secondary battery cells therein, the exterior case includes a gas exhaust port configured to discharge a gas discharged from the cell exhaust mechanism opening to the exterior case; a metal plate demarcating a gas exhaust path configured to guide a gas to the gas exhaust port inside the exterior case, the gas being discharged when the cell exhaust mechanism of one of the plurality of secondary battery cells opens, the metal plate having thermal conductivity; and a heater thermally coupled with the metal plate.

## Description

### TECHNICAL FIELD

The present disclosure relates to a power supply device.

### BACKGROUND ART

A power supply device including rechargeable secondary battery cells, such as lithium-ion secondary batteries, connected in series or parallel to power electrical equipment is used. It is known that lithium ion batteries, which are used in such a power supply device, used under low temperature have properties thereof deteriorate. Accordingly, a power supply device including a heating mechanism for adjusting temperature of the secondary battery cells has been proposed (e.g., PTL 1). The power supply device of PTL 1 includes a heat plate provided on a side wall and a lower end of each second battery cell so as to be thermally coupled with the second battery cells. The heat plate is configured to cause a thermal fluid to flow through its inner space, thereby heating the secondary battery cells.

However, the method of PTL 1 requires a mechanism for circulating the thermal fluid. This may enlarge the power supply device disadvantageously. Further, if a liquid is used as the thermal fluid, waterproofing or leakage measures will be needed to prevent entry of the liquid into the secondary battery cells. In recent years, the power supply device has been demanded to improve its energy density per volume. To improve the energy density per volume, it is necessary to minimize members other than secondary battery cells as much as possible. This is contrary to the requirement for controlling operation environment temperature mentioned above.

### CITATION LIST

### Patent Literature

PTL 1: International Publication WO 2020/146419

### SUMMARY OF INVENTION

An object of the present disclosure is to provide a power supply device allowing a secondary battery cell to be used even under low temperature environment. Further, another object is to provide a new power supply device. Note that, neither these objects of the present disclosure nor description of the problems bars existence of other objects and problems. Further, one aspect of the present disclosure does not need to solve all these problems. Furthermore, another problem other than these can be extracted from description of the specification, the drawings, and the claims of the present disclosure.

A power supply device in accordance with an aspect of the present disclosure includes: a plurality of secondary battery cells, each of the plurality of secondary battery cells including a cell exhaust mechanism configured to open in response to an increase in internal pressure of the each of the plurality of secondary battery cells; an exterior case accommodating the plurality of secondary battery cells therein, the exterior case includes a gas exhaust port configured to discharge a gas discharged from the cell exhaust mechanism opening to the exterior case; a metal plate demarcating a gas exhaust path configured to guide a gas to the gas exhaust port inside the exterior case, the gas being discharged when the cell exhaust mechanism of one of the plurality of secondary battery cells opens, the metal plate having thermal conductivity; and a heater thermally coupled with the metal plate.

According to the power supply device in accordance with the aspect of the present disclosure, the metal plate demarcating the gas exhaust path is thermally coupled with the heater to heat the secondary battery cells. Even under low temperature environment, the power supply device allows the secondary battery cells to be used stably without deteriorating their properties.

### BRIEF DESCRIPTION OF DRAWINGS

FIG. 1 is a perspective view of a power supply device in accordance with Exemplary Embodiment 1.
FIG. 2 is a perspective view the power supply device shown in FIG. 1 viewed from obliquely below.
FIG. 3 is an exploded perspective view of the power supply device shown in FIG. 1.
FIG. 4 is an exploded perspective view of the power supply device shown in FIG. 2.
FIG. 5 is an exploded perspective view of the power supply device shown in FIG. 3.
FIG. 6 is an exploded perspective view of the power supply device shown in FIG. 4.
FIG. 7 is a cross-sectional view of the power supply device along line VII-VII shown in FIG. 1.
FIG. 8 shows a simulation result of heating a power supply device in accordance with a modification with a heater.
FIG. 9 is an exploded perspective view of a power supply device in accordance with Exemplary Embodiment 2.
FIG. 10 is a perspective view of the power supply device shown in FIG. 9 viewed from obliquely below.
FIG. 11 is an enlarged cross-sectional view of the power supply device in accordance with Embodiment 2.
FIG. 12 shows a simulation result of heating the power supply device in accordance with Embodiment 2 with a heater.

### DESCRIPTION OF EMBODIMENTS

Aspects of the present disclosure may be specified by the following configuration and features.

In a power supply device in accordance with another aspect of the present disclosure, the metal plate is spaced away from the plurality of secondary battery cells in the above aspect. According to the above-mentioned configuration, a distance between the heater and each secondary battery cell allows the secondary battery cells to be heated via air, thereby preventing rapid heating.

In a power supply device in accordance with another aspect of the present disclosure, the heater thermally coupled with the metal plate is configured to heat the plurality of secondary battery cells by heat radiation without contacting the plurality of secondary battery cells in any one of the above aspects. According to the above-mentioned configuration, the metal plate spaced from the secondary battery cells may be used to heat the secondary battery cells in a non-contact manner.

In a power supply device in accordance with another aspect of the present disclosure, the metal plate faces an end surface of the each of the plurality of secondary battery cells at which the cell exhaust mechanism is provided in any one of the above aspects.

In a power supply device in accordance with another aspect of the present disclosure, the heater has a sheet shape in any one of the above aspects.

In a power supply device in accordance with another aspect of the present disclosure, the heater is one of a PTC heater, an aluminum etching heater, and a heating wire heater in any one of the above aspects.

In a power supply device in accordance with another aspect of the present disclosure, the metal plate and the heater are held in a posture along a gravity direction on side surfaces of the plurality of secondary battery cells inside the exterior case in any one of the above aspects.

In a power supply device in accordance with another aspect of the present disclosure, the heater has an area smaller than that of the metal plate in any one of the above aspects.

In a power supply device in accordance with another aspect of the present disclosure, an end of the metal plate has a cross section bent in an L-shape in any one of the above aspects. According to the above-mentioned configuration, the secondary battery cells are heated from at least two surfaces, thereby heating the secondary battery cells more efficiently.

The present invention will be detailed below with reference to the drawings. However, exemplary embodiments described below show specific examples of the technical thought of the present invention, and does not limit the present invention to below. Further, the present description does not intend to specify members shown in the claim to the members described in the exemplary embodiments. Especially, dimensions, materials, and shapes of the components described in the exemplary embodiments, a relative arrangement therebetween, and the like intend not to limit the scope of the present invention but to merely illustrate the scope, unless otherwise noted. Note that, sizes of members shown in each drawing, a positional relationship therebetween, or the like may be exaggerated to clarify the description. Furthermore, in the following description, similar names or reference signs indicate like or equivalent members, and detailed description thereof will be omitted. Furthermore, each element constituting the present disclosure may be configured such that a plurality of elements are constituted by the same members to serve the plurality of elements as one member, or a function of one member is shared by the plurality of elements vice versa.

A power supply device of the present disclosure can be used in stationary energy storage applications as a backup power supply for a server or a household, office, and factory power supply. Further, the power supply device can be used as a power supply of a walkie-talkie or portable electrical equipment such as an electric cleaner and a power tool, or a power supply for powering movable bodies such as an electric cart, an electric scooter, and an assistant bicycle. Furthermore, the power supply device can be used for a power supply for powering vehicles such as a hybrid car and an electric vehicle. A power supply device used as a power supply for powering a storage power source will be described as exemplary embodiments of the present invention.

### Exemplary Embodiment 1

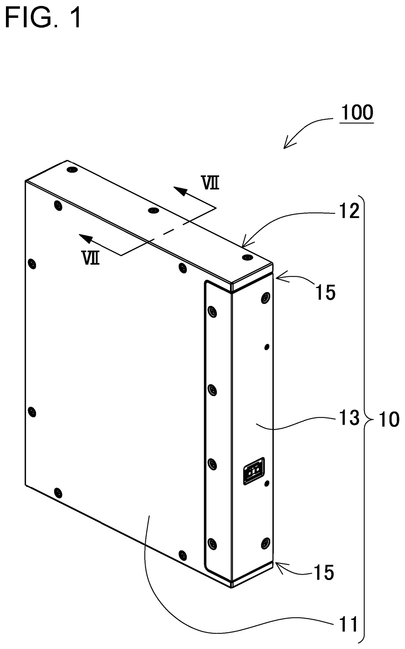

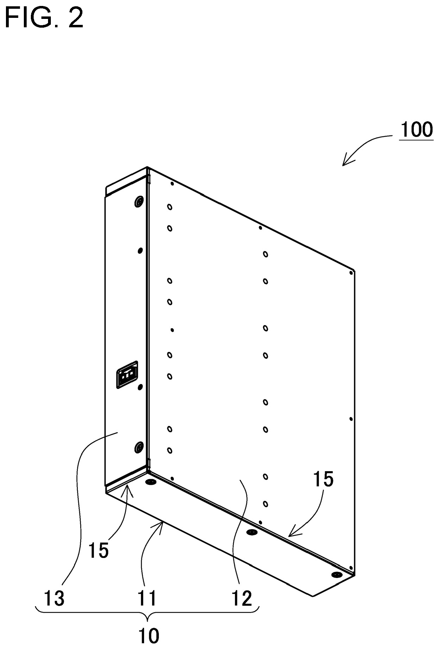

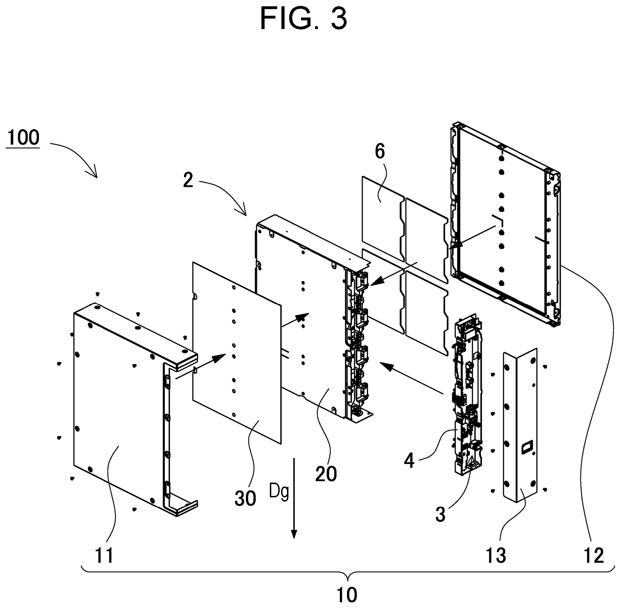

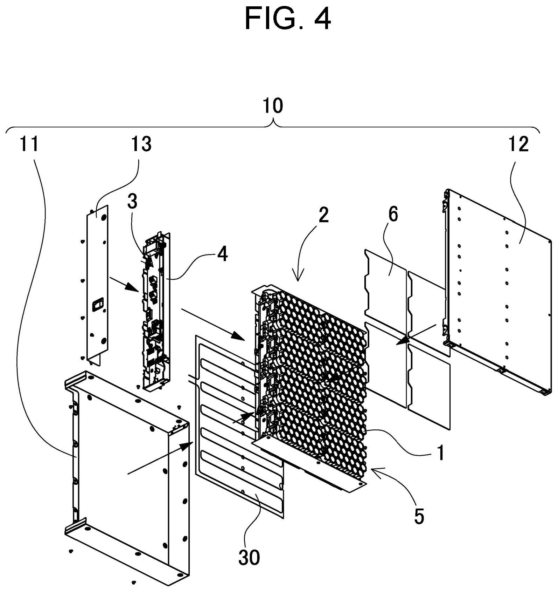

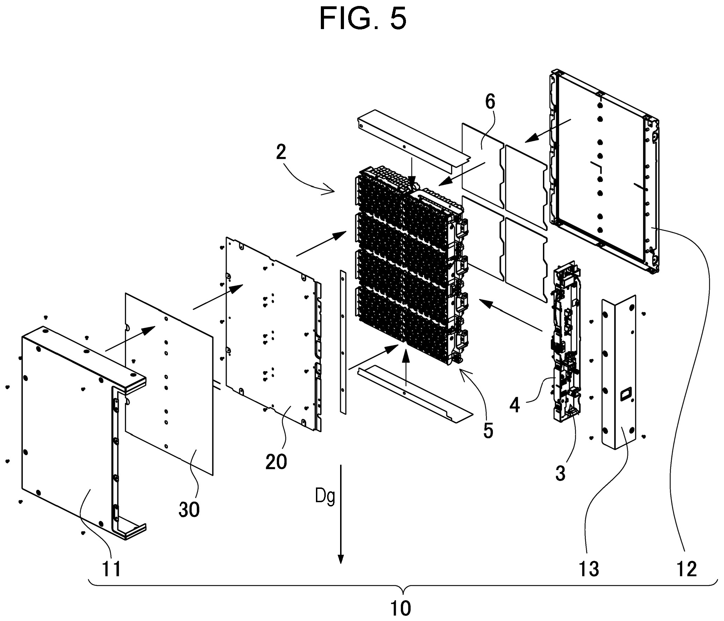

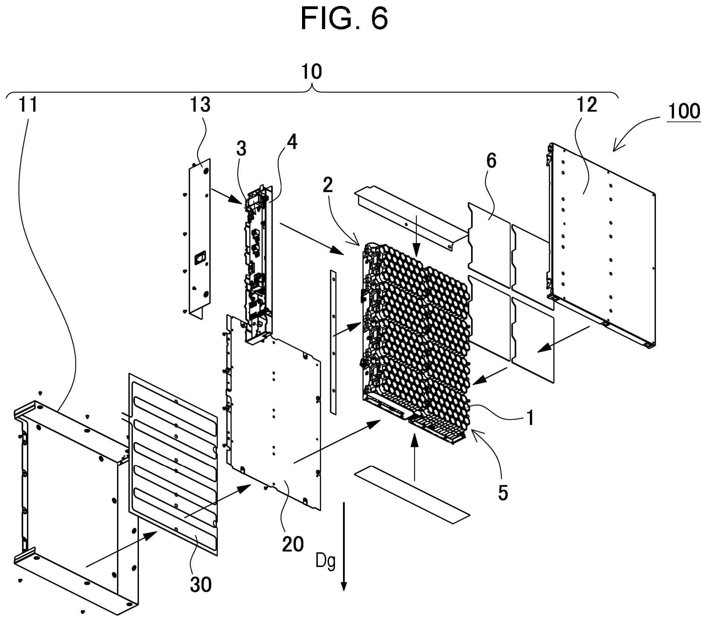

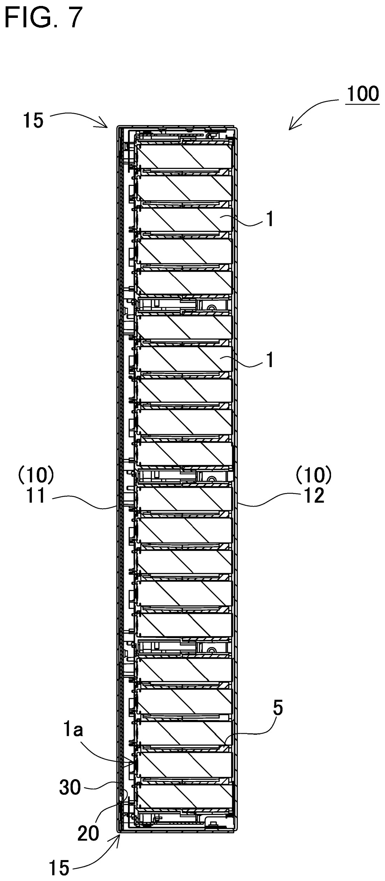

Power supply device 100 in accordance with Exemplary Embodiment 1 of the present disclosure is shown in FIGS. 1-7. FIG. 1 is a perspective view of power supply device 100 in accordance with Embodiment 1. FIG. 2 is a perspective view of power supply device 100 shown in FIG. 1 viewed from obliquely below. FIG. 3 is an exploded perspective view of power supply device 100 shown in FIG. 1. FIG. 4 is an exploded perspective view of power supply device 100 shown in FIG. 2. FIG. 5 is an exploded perspective view of power supply device 100 shown in FIG. 3. FIG. 6 is an exploded perspective view of power supply device 100 shown in FIG. 4. FIG. 7 is a cross-sectional view of power supply device 100 along line VII-VII shown in FIG. 1. Power supply device 100 shown in these figures includes exterior case 10, battery module 2, metal plate 20, heater 30, and circuit board 3.

### Exterior Case 10

Exterior case 10 accommodates therein battery module 2, metal plate 20, heater 30, and circuit board 3. Exterior case 10 may have any shape as long as a storage space is provided inside of the case. In the example shown in FIGS. 1 and 2, exterior case 10 has a box shape extending in one direction.

Exterior case 10 is divided into three cases, i.e., first case 11, second case 12, and third case 13 as shown in, e.g., FIGS. 3-6. The exterior case does not necessarily have this configuration, but may be divided into two cases, i.e., an upper case and a lower case, or may be divided into four cases or more, for example. Exterior case 10 is made of a material, e.g., a metal, such as a zinc-coated steel plate and a stainless plate, with high strength and high heat dissipation. Exterior case 10 may be made of material, e.g., resin, such as polycarbonate and a PC-ABS alloy, with high insulation.

As shown in FIGS. 3-7, an internal space configured to accommodate battery module 2 or the like is provided inside exterior case 10. Exterior case 10 may be disposed vertically so as to be in a posture allowing metal plate 20 and heater 30 accommodated in the internal space to be positioned on side surfaces of secondary battery cells 1. In other words, metal plate 20 and heater 30 are held in a posture along gravity direction Dg on the side surfaces of secondary battery cells 1 inside exterior case 10. As mentioned later, exterior case 10 disposed vertically provides an advantageous effect that temperature distribution is more uniform due to an influence of convection of the heated air.

### Battery Module 2

Battery module 2, which is called a core pack, accommodates secondary battery cells 1 therein. Battery module 2 may include cell blocks, and accommodate each of the secondary battery cells in a corresponding one of the cell block. In the example shown in FIG. 4, 6, and 7, a large number of secondary battery cells of cylindrical type are accommodated in battery holder 5 in a lateral posture to be held.

Secondary battery cells 1 are connected in series or parallel to one another with a lead plate. The number of series connections and the number of parallel connections may be set optionally according to a required specification. In the example shown in FIG. 4, as a total of battery module 2, 280 secondary battery cells 1 are connected in 20 series and 14 parallels to one another, but the number of series connections and the number of parallel connections are not limited to this configuration.

Battery holder 5 includes two or more housing tubes each accommodating therein secondary battery cell 1 individually. For instance, as shown in FIG. 7, each battery holder 5 is divided into two parts, i.e., an upper part and a lower part, and secondary battery cell 1 is accommodated so as to be sandwiched from upper and lower sides. Battery holder 5 may be made of resin, such as polycarbonate with high insulation.

### Secondary Battery Cell 1

A cylindrical type or a square type of secondary battery cell may be used as each second battery cell 1. In the example shown in FIGS. 4, 6, and 7, secondary battery cells 1 of a cylindrical type are alternately arranged in a lateral posture. The number of secondary battery cells 1 or an arrangement of secondary battery cells 1 is not limited to this example, but the number and arrangement may be determined optionally and adopted as necessary. For instance, secondary battery cells of a cylindrical type may be arranged in a matrix manner.

Each second battery cell 1 includes a positive electrode and a negative electrode. As secondary battery cell 1, already-known secondary batteries, such as a lithium-ion secondary battery, a nickel-hydride battery, and a nickel-cadmium battery, may be used as necessary.

### Cell Exhaust Mechanism 1a

As shown in FIG. 7, cell exhaust mechanism 1a is provided in the exterior can of each second battery cell 1. Cell exhaust mechanism 1a opens in response to an increase of internal pressure of the exterior can, and gas inside the exterior can is discharged to the outside of the cell. Cell exhaust mechanism 1a is provided on, e.g., a positive electrode side of secondary battery cell 1.

### Gas Exhaust Port 15

Exterior case 10 includes gas exhaust port 15. When cell exhaust mechanism 1a of secondary battery cell 1 opens and high-pressure gas is discharged, gas exhaust port 15 discharges the high-pressure gas to the outside of the case. As shown in FIG. 1, in power supply device 100 in accordance with Embodiment 1, gas exhaust port 15 is constituted by a gap between first case 11 and second case 12 or a gap between first case 11 and third case 13 which constitute exterior case 10. Although not shown, an opening may be formed in the exterior case as the gas exhaust port.

### Insulating Board 6

Insulating board 6 is disposed on a side surface of battery module 2. Insulating board 6 has a size covering the entire surface of battery module 2. In the example shown in FIGS. 3-6, four insulating sheets are disposed between the side surface of battery module 2 (right-hand side in the figure) and an inner surface of exterior case 10 as insulating board 6. Insulating board 6 is made of material, such as paper and mica, with high insulation.

### Circuit Board 3

Battery module 2 is connected to circuit board 3 with a lead plate. For example, a charging and discharging circuit are mounted onto circuit board 3. The charging and discharging circuit is configured to charge and discharge secondary battery cells 1. The protection circuit is configured to monitor voltages and temperature of secondary battery cells 1 to shut down current when an abnormality occurs. Circuit board 3 is made of, e.g., a glass epoxy board. Circuit board 3 is held by board holder 4. In the example shown in FIGS. 3-6, board holder 4 is disposed on an end surface of battery module 2 in a thickness direction of battery module 2. Board holder 4 is covered with third case 13. Third case 13 is connected to a connector on circuit board 3 or the like, and a connection terminal is provided outside third case 13.

### Metal Plate 20

Metal plate 20 demarcates a gas exhaust path inside exterior case 10. The gas exhaust path is configured to guide gas to gas exhaust port 15. The gas is discharged when cell exhaust mechanism 1a included in one of secondary battery cells 1 opens. The gas exhaust path is formed on a side surface of battery module 2. In the example shown in FIG. 7, the gas exhaust path is formed between the left-hand side of battery module 2 and an inner surface of exterior case 10. For this reason, each second battery cell 1 constituting battery module 2 is held in a posture in which an end surface of each second battery cell is directed to the left-hand side in the figure. Cell exhaust mechanism 1a is provided on the end surface. The gas exhaust path demarcated by metal plate 20 forms, e.g., a gas duct.

Metal plate 20 shown in FIGS. 3-6 has substantially the same size and the same shape as the side surface of battery module 2. If hot and high-pressure gas is discharged from cell exhaust mechanism 1a, metal plate 20 has strength enough to withstand the hot and high-pressure gas. Metal plate 20 is made of a metal, such as a zinc-coated steel plate or a stainless plate, with high thermal conductivity.

### Heater 30

Heater 30 is thermally coupled with metal plate 20 and is configured to heat metal plate 20. Upon being activated, heater 30 heats metal plate 20 thermally coupled with heater 30. Then, battery module 2 is heated through metal plate 20. It is known that a lithium ion battery deteriorates in properties when used under low temperature. For this reason, depending on ambient temperature under use environment of power supply device 100, e.g., if the ambient temperature is low, heater 30 is activated to heat secondary battery cell 1, thereby preventing the deterioration in properties. Metal plate 20 demarcating the gas exhaust path allows the metal plate to be thermally coupled with heater 30 to heat secondary battery cells 1. As a result, a mechanism for heating secondary battery cell 1 can be simplified.

Heater 30 has a sheet shape. A thin planar type of heater 30 avoids enlargement of power supply device 100. As heater 30 of a thin planar type, a PTC heater, an aluminum etching heater, a heating wire heater, or the like may be employed.

As shown in FIG. 7, metal plate 20 thermally coupled with heater 30 is spaced away from the end surface of each second battery cell 1. This configuration prevents secondary battery cells 1 from directly contact heater 30 and metal plate 20. Secondary battery cells 1 heated via an air layer are prevented from being rapidly heated. Heater 30 heats each second battery cell 1 by radiant heat. Thus, each second battery cell 1 is heated while not contacting heater 30.

Metal plate 20 may function as a heat spreader configured to heat second battery cells 1 uniformly. In the case where a large number of secondary battery cells are heated from the periphery, a secondary battery cell located inside is hardly heated. Accordingly, in power supply device 100 in accordance with the embodiment, secondary battery cells 1 are arranged such that the end surfaces of secondary battery cells 1 are flush with one another, i.e., each end surface faces metal plate 20, thereby heating each second battery cell 1 with metal plate 20. In addition to this, if planar metal plate 20 is used, the heat of heater 30 will be uniform in a surface direction. Thus, the secondary battery cells are heated uniformly regardless of their location, thereby reducing a temperature difference between the secondary battery cells.

An electrically insulating sheet may be disposed between heater 30 and metal plate 20 which are thermally coupled with each other. The electrically insulating sheet preferably has thermal conductivity so as not to inhibit the thermal coupling between heater 30 and metal plate 20. The electrically insulating sheet is made of silicone resin, mica, or paper with high insulating properties. The electrically insulating sheet is disposed to insulate metal plate 20 from heater 30 which is made of conductive material, such as metal, thereby enhancing safety.

A thermally insulating material may be disposed between the heater and the inner surface of the exterior case to insulate the heater from the exterior case. To insulate the exterior case from heater 30, mica, insulating paper, or a polycarbonate (PC) sheet with thermal insulating properties is preferably employed. Alternatively, an air gap may be provided instead of the thermally insulating material. The air gap provided between the heater and the inner surface of the exterior case forms an air layer. The air layer provides electrical insulation and thermal insulation. If a sufficient breakdown voltage performance is obtained between the heater and the inner surface of the exterior case, the insulating board will be made unnecessary, thereby providing a simple configuration, weight saving, and cost reduction.

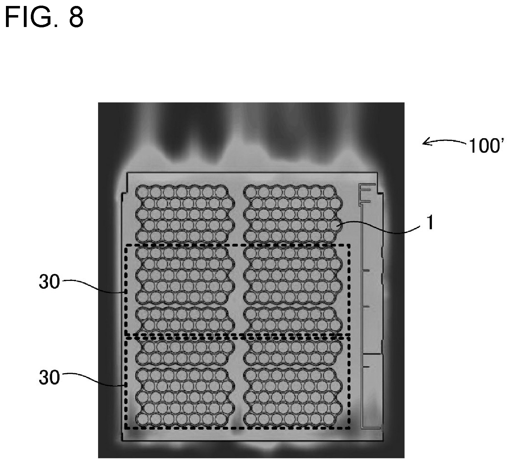

The heater is formed of a single piece, or may cover the metal plate such that plural heater pieces are arranged on the metal plate. Heater 30 shown in FIGS. 3-6 has substantially the same size and the same shape as metal plate 20. However, the size of heater 30 does not necessarily coincide with the size of metal plate 20. An area of heater 30 may be smaller than that of the metal plate. If exterior case 10 is placed vertically as shown in FIG. 7, heat convection will occur and facilitate heating an upper side. Therefore, the height of heater 30 is smaller than that of metal plate 20, and bottom sides of heater 30 and metal plate 20 are substantially aligned, i.e., an exposed area, which is not covered with heater 30, may be provided in an upper part of metal plate 20. FIG. 8 shows a simulation result in the state where power supply device 100' in accordance with a modification is heated by heater 30. In this figure, the dashed line represents areas where two heaters 30 are arranged. As shown in this figure, it is verified that, even if heater 30 is disposed in a lower part of metal plate 20, i.e., the exposed area is provided in the upper part, 280 secondary battery cells 1 are heated uniformly.

### Exemplary Embodiment 2

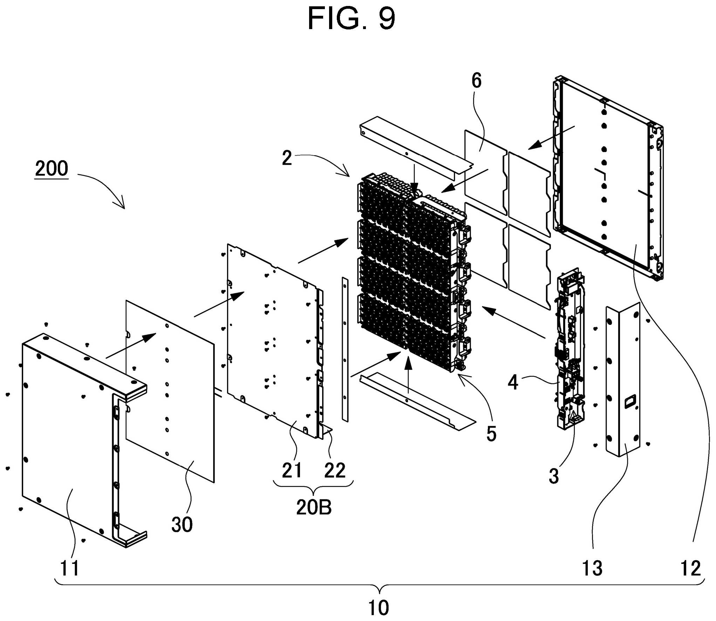

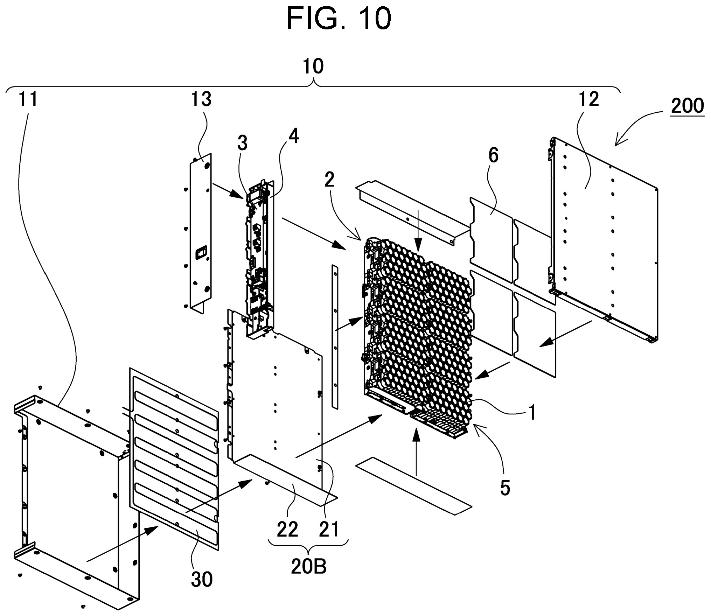

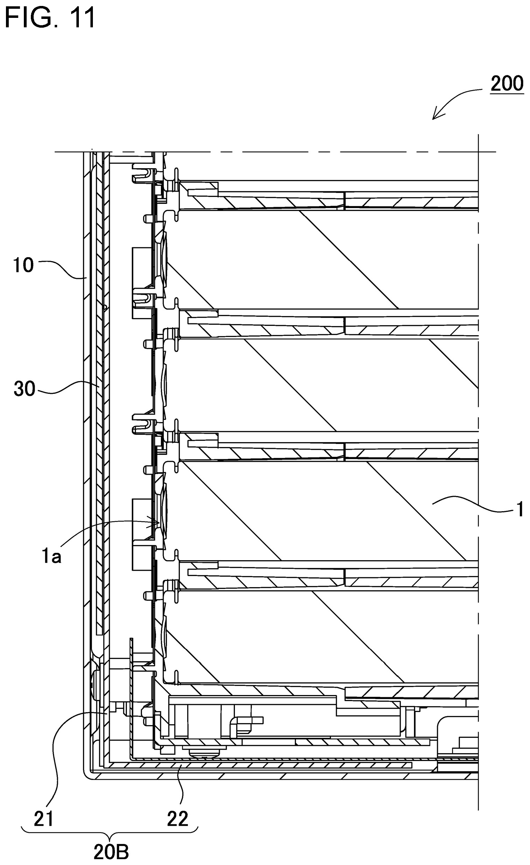

The examples, mentioned above, have exemplarily described the case where planar metal plate 20 is used. However, the present disclosure is not limited to the configuration in which the planar metal plate is used. For instance, an end edge of the metal plate may have a cross section bent in an L-shape. This configuration allows the battery module to be heated from at least two surfaces, thereby heating the battery module more efficiently. FIGS. 9-11 show examples as power supply device 200 in accordance with Exemplary Embodiment 2. FIG. 9 is an exploded perspective view of power supply device 200 in accordance with Embodiment 2. FIG. 10 is an exploded perspective view of power supply device 200 shown in FIG. 9 viewed from obliquely below. FIG. 11 is an enlarged cross-sectional view of power supply device 200 in accordance with Embodiment 2. In these figures, components identical to those of Embodiment 1 are denoted by the same reference numerals, and their detailed description will be omitted.

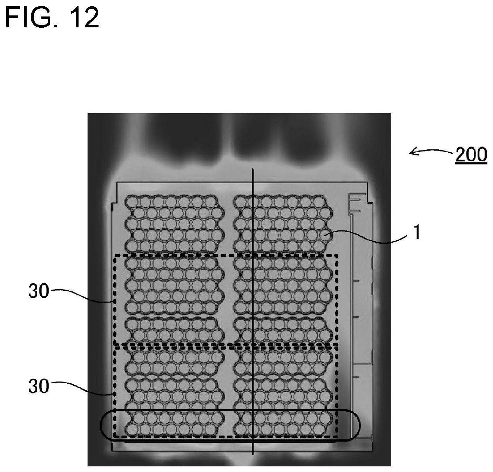

An edge of metal plate 20B on a lower end side of main face 21 is bent to form bent piece 22. As shown in the enlarged cross-sectional view of FIG. 11, L-shaped metal plate 20B in which bent piece 22 is formed in cross-sectional view is disposed so as to cover at least one part of a lower surface of battery module 2 with bent piece 22. This configuration allows metal plate 20B to extend also to a bottom side of battery module 2. Thus, battery module 2 may be heated from not only the side surface of battery module 2 but also the bottom side, so that the entire battery module 2 can be heated efficiently by heat convection. FIG. 12 shows a simulation result of power supply device 200 in accordance with Embodiment 2 heated with heater 30. As shown in this figure, it is verified that thermal uniformity is enhanced, i.e., temperature of the secondary battery cell on the lower side is increased as compared with FIG. 8, and especially, a low-temperature portion of the secondary battery cell is decreased on the lower side, so that a temperature difference between the middle part and the lower part can be suppressed.

In the above-mentioned examples, a stationary type of the power supply device has been described exemplarily, but the present disclosure is not limited to this. The present disclosure may be used for the other application in which the power supply device is mounted on electrical equipment, serving as a powering target, to supply electric power to the electrical equipment. As the electrical equipment, movable bodies, such as an electric motor and an electric cart, and portable electrical equipment are employed. In such electrical equipment, if remaining capacity of the power supply device decreases, or if age deterioration of the power supply device occurs, the power supply device can be replaced to use the electrical equipment continuously. However, in the present disclosure, the power supply device is not limited to a replaceable type of power supply device in which secondary battery cells are mainly accommodated. The power supply device is also applicable for an aspect in which secondary battery cells are housed in a housing of electrical equipment. In the present disclosure, the power supply device is only required to house secondary battery cells inside a case, and also includes electrical equipment in which secondary battery cells for powering are incorporated in its housing. In other words, in the present disclosure, the power supply device is not limited to a replaceable type of power supply device, but can be applied for electrical equipment in which secondary battery cells are incorporated.

### INDUSTRIAL APPLICABILITY

A power supply device in accordance with the present disclosure may be used suitably as a backup power supply for a server or a household, office, and factory power supply. Alternatively, the power supply device can be used suitably as a power supply for powering movable bodies such as an electric cart, an electric scooter, and an assistant bicycle. Further, the power supply device can also be used as a power supply of a walkie-talkie or portable electrical equipment, such as an electric cleaner and a power tool, as necessary.

### REFERENCE MARKS IN THE DRAWINGS

100,100', 200 power supply device
1 secondary battery cell
1a cell exhaust mechanism
2 battery module
3 circuit board
4 board holder
5 battery holder
6 insulating board
10 exterior case
11 first case
12 second case
13 third case
15 gas exhaust port
20, 20B metal plate
21 main surface
22 bent piece
30 heater

## Claims

1. A power supply device comprising:
a plurality of secondary battery cells, each of the plurality of secondary battery cells including a cell exhaust mechanism configured to open in response to an increase in internal pressure of the each of the plurality of secondary battery cells;
an exterior case accommodating the plurality of secondary battery cells therein, the exterior case includes a gas exhaust port configured to discharge a gas discharged from the cell exhaust mechanism opening to the exterior case;
a metal plate demarcating a gas exhaust path configured to guide a gas to the gas exhaust port inside the exterior case, the gas being discharged when the cell exhaust mechanism of one of the plurality of secondary battery cells opens, the metal plate having thermal conductivity; and
a heater thermally coupled with the metal plate.

2. The power supply device according to claim 1, wherein the metal plate is spaced away from the plurality of secondary battery cells.

3. The power supply device according to claim 1, wherein the heater thermally coupled with the metal plate is configured to heat the plurality of secondary battery cells by heat radiation without contacting the plurality of secondary battery cells.

4. The power supply device according to claim 1, wherein the metal plate faces an end surface of the each of the plurality of secondary battery cells at which the cell exhaust mechanism is provided.

5. The power supply device according to claim 1, wherein the heater has a sheet shape.

6. The power supply device according to claim 1, wherein the heater is one of a PTC heater, an aluminum etching heater, and a heating wire heater.

7. The power supply device according to any one of claims 1 to 6, wherein the metal plate and the heater are held in a posture along a gravity direction on side surfaces of the plurality of secondary battery cells inside the exterior case.

8. The power supply device according to any one of claims 1 to 6, wherein an end of the metal plate has a cross section bent in an L-shape.
